# EUROPEAN PATENT SPECIFICATION

(11) **EP 1 724 165 B1**
(45) Date of publication and mention of the grant of the patent: **24.12.2008**
(21) Application number: 06010418.9
(22) Date of filing: 19.05.2006
(51) Int. Cl.: B60R 25/02

(54) **Vehicle controller for straddle-type vehicle**
Fahrzeugsteuerungsvorrichtung für Spreitzsitz-Fahrzeuge
Contrôleur de véhicule pour véhicule du type monté à califourchon

(30) Priority: 20.05.2005 JP 2005148596
(43) Date of publication of application: 22.11.2006
(73) Proprietor: Yamaha Hatsudoki Kabushiki Kaisha, Iwata-shi, Shizuoka-ken 438-8501 (JP)
(72) Inventor: Unno, Hitoshi, Iwata-shi Shizuoka-ken, 438-8501 (JP)
(74) Representative: Grünecker, Kinkeldey, Stockmair & Schwanhäusser Anwaltssozietät

(56) References cited:
- US-A- 5 343 077
- US-A- 5 965 955

## Description

The present invention relates to a vehicle controller for a straddle-type vehicle having an authentication function.

Prior art document US 5,343,077 teaches an electric power supply control device for a vehicle comprises a lock actuator for driving actuators of the vehicle and an operation switch for outputting all operation instruction signal to the lock actuator. A circuit for vehicle running system for actuating an engine of the vehicle and a steering lock circuit for actuating the steering lock actuator in a locking direction are connected, exclusively with each other, to a power supply circuit. Wireless communication is conducted between a driver's transceiver and the vehicle when the vehicle engine is stopped and the power supply circuit therefor remains on, to automatically disconnect the power supply circuit. For manual locking, a lock pin is disposed slidably within a casing. First and second rods are secured to the lock pin in perpendicular to the axial line of the pin. A compressed spring is held between the first rod situated near the center of the lock pin and the inner wall of the casing, by which the lock pin is always biased resiliently to the inside of the casing. An operation lever has a knob formed at one end and being protruded to the outside of the vehicle. The other end of the lever has a cam generally of a V-shaped configuration. The cam is engaged with the second rod situated near one end of the lock pin. With such a constitution, when the operation lever is pulled, the lock pin can protrude outwardly of the casing against the resilient force of the spring to lock the handlebars.

For commonly used two-wheeled motor vehicles, engine start/stop and locking/release of the steering are performed by mechanical key operation that must involve inserting a key into a keyhole before key operation, which is burdensome. Thus, a remote control system has been proposed in which an owner of the vehicle carries a portable transmitter (portable device) for transmitting a signal to the vehicle to remotely control the engine for its startup and the steering lock for release. This system ensures security by coding the signal to be transmitted to the vehicle as well as by authenticating the received encrypted signal with an authentication function installed on the vehicle.

JP-A-Hei 3-21575 discloses a conventional art of such authentication system. In this system, after authentication succeeds, a power circuit for driving the vehicle is switched-ON, and under this condition, an engine start circuit and a lock/unlock actuator, such as steering lock, are enabled, so that a starting and a release switches are manually operated to start-up the engine and release the steering lock, respectively. According to this system, if the authentication fails, the power circuit for driving the vehicle cannot be switched-ON, which disables the engine and the release function of the steering lock to provide antitheft protection for the vehicle.

In addition, JP-A-Hei 6-247260 discloses another conventional art of the authentication system with a non-contact IC card. If authentication succeeds, the steering lock is released while the engine is set to be enabled in conjunction with the release of the steering lock. Engine enabled state setting means as well as steering lock release means are accommodated together in a rigid steering lock unit, thereby preventing from compulsory engine start-up by an unauthenticated driver.

According to the disclosure of JP-A-Hei 3-21575, if authentication is determined to be successful, the engine start circuit and the release actuator, such as the steering lock, are enabled. But indeed, manual operation of the starter and release switches is necessary for engine start-up or release of the steering lock. Thus, in the case where moving a vehicle without starting-up the engine is desired solely for the purpose of maintenance or the like, releasing the steering lock must involve manual operation of the release switch after authentication is determined to be successful, which is burdensome. Also, locking of the steering lock is performed by activating the actuator. In a commonly used steering lock mechanism, however, higher torque is required to the actuator for locking than for releasing, resulting in a problem of an increase in the size of the actuator.

According to the disclosure of JP-A-Hei 6-247260, a non-contact IC card is used to determine authentication, and if the authentication is successful, the steering lock is released, but not using remote control, which causes a usability problem. Further, locking of the steering lock is manually performed, requiring no large actuator. However, locking is performed by rotary movement of an operation lever, resulting in a problem of securing space for rotation for the operation lever, which imposes restraint on layout flexibility of the operation lever.

The present invention is made in view of the foregoing problems, and an object of the invention is to provide a vehicle controller for a straddle-type vehicle, which offers improved maintenance convenience and has an authentication function with excellent operability.

This objective is solved in an inventive manner by a vehicle controller for a straddle type vehicle having the features of independent claim 1.

According to a preferred embodiment, the vehicle controller further comprises a control unit, wherein if the authentication is determined to be successful, the release signal is issued from the control unit of the vehicle to actuate the automatic release means for the steering lock.

Preferably, the manual lock means for the steering lock is actuated though user's operation with the locking switch, which is a push-type locking operation element to permit manual locking.

Further preferably, the manual lock means for manually locking the steering lock is formed integrally with the automatic release means for automatically releasing the steering lock.

Still further preferably, once the steering lock is automatically released, the manual lock means is kept in the state where manual locking is not allowed until the power source of the control unit is turned off.

According to a further preferred embodiment, the code signal transmitted from the portable device is transmitted in response to a request signal transmitted in response to user's operation of an activating switch provided in the vehicle, and wherein the activating switch is a push switch.

According to yet another preferred embodiment, the activating switch has the constitution of a two-stage push switch so that the request signal is transmitted from the vehicle in response to user's first pressing operation and the power source of the control unit is turned off in response to user's second pressing operation.

There is further provided a straddle-type vehicle incorporating the vehicle controller for a straddle type vehicle according to one of the above embodiments.

In the following, the present invention is explained in greater detail with respect to several embodiments thereof, in conjunction with the accompanying drawings, wherein:
FIG. 1 is a block diagram illustrating the configuration of a vehicle controller for a two-wheeled motor vehicle according to an embodiment,
FIGs. 2(a) and 2(b) are sectional views illustrating the constitution of a steering lock according to the embodiment,
FIGs. 3(a) and 3(b) are sectional views illustrating the constitution of the steering lock according to the embodiment,
FIG. 4 is a flow chart illustrating a vehicle control method using the vehicle controller according to the embodiment, and
FIG. 5 illustrates an example in which the vehicle controller for a two-wheeled motor vehicle is mounted to the vehicle.

### Description of Reference Numerals:

10: control unit
11: portable device
12: (transmitter) receiver
13: authentication means
14: power source
15: release control section
16: activating switch
20: steering lock
21: automatic release means (actuator)
22: manual lock means
23: locking switch
30: lock pin
31: handlebars
32: slider
33: link mechanism
34,35: spring
36: projection
50: seat
60: wiring
100: vehicle controller
200: two-wheeled motor vehicle

An embodiment is described below with reference to the drawings. In the drawings below, for the sake of simplifying explanation, components having substantially the same function are indicated with the same reference symbol. Further, the teaching of the present invention is not limited to the following embodiment.

### (Embodiment 1)

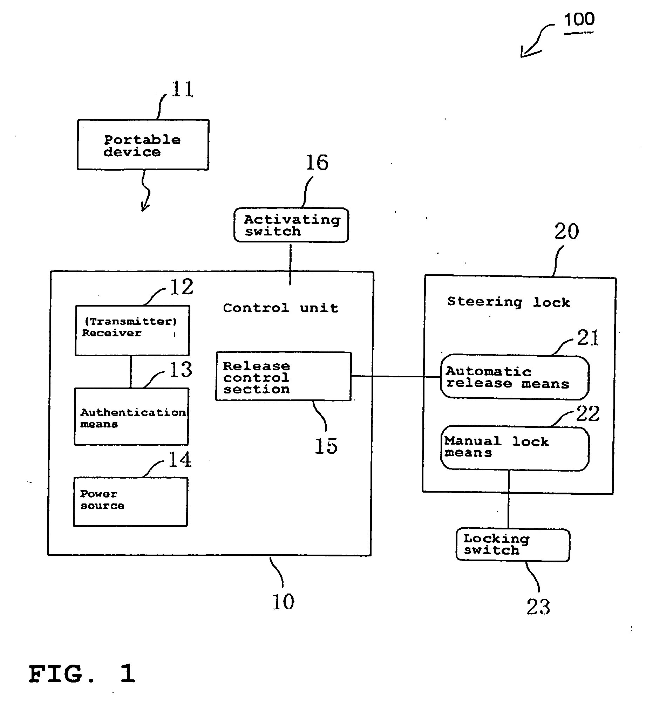

FIG. 1 is a block diagram illustrating a basic configuration of a vehicle controller 100 for a two-wheeled motor vehicle according to the embodiment.

The vehicle controller 100 of the embodiment has an authentication system including: a portable device 11, which a rider carries, for transmitting a code signal; a receiver 12 installed in the vehicle for receiving the code signal; and authentication means 13 for identifying the received code signal to authenticate whether or not a rider is an owner of the vehicle.

A non-contact IC card, a remote control switch or the like may be used as the portable device 11. For example, in the case of using the non-contact IC card, the code signal need be stored in the non-contact IC card in advance. The IC card is brought close to the receiver 12 to make the card read out the code signal, which is transmitted to the authentication means 13 for code identification. In turn, in the case of using the remote control switch, a signal corresponding to the code signal (e.g. infrared signal) is transmitted through switch operation to the receiver 12, and then transmitted to the authentication means 13 for code identification.

Alternatively, an activating switch 16 may be provided in the vehicle. In this case, in response to rider's operation of the activating switch 16, the transmitter-receiver 12 (receiver 12 with a transmission function added) transmits a request signal, and in response to the request signal, the portable device 11 transmits a code signal. In this case, the rider is only required to operate the activating switch, attached to the vehicle, with the portable device 11 in his/her pocket or the like, for authentication, providing improved usability compared to the non-contact IC card or the remote control switch. Alternatively, the vehicle may constantly transmit a code signal instead of transmitting a request signal.

In the above authentication system, when code identification is successful, a release signal is issued from an unlock control section 24 of a control unit 10 to cause a steering lock 20 to actuate automatic release means (e.g. actuator) 21 to automatically release the steering lock 20.

When a power source 14 of the control unit 10 is turned off, manual locking of the steering lock 20 is allowed. Rider's operation of a locking switch 23 achieves manual locking of the steering lock 20. The control unit 10 issues a locking enabling signal to the steering lock 20, and receives a signal indicating that locking is allowed from the steering lock 20 to turn the power source 14 off. The locking switch 23 is a push switch, requiring no space for rotation for a rotary operation lever, which imposes no restraint on layout flexibility of the locking switch 23.

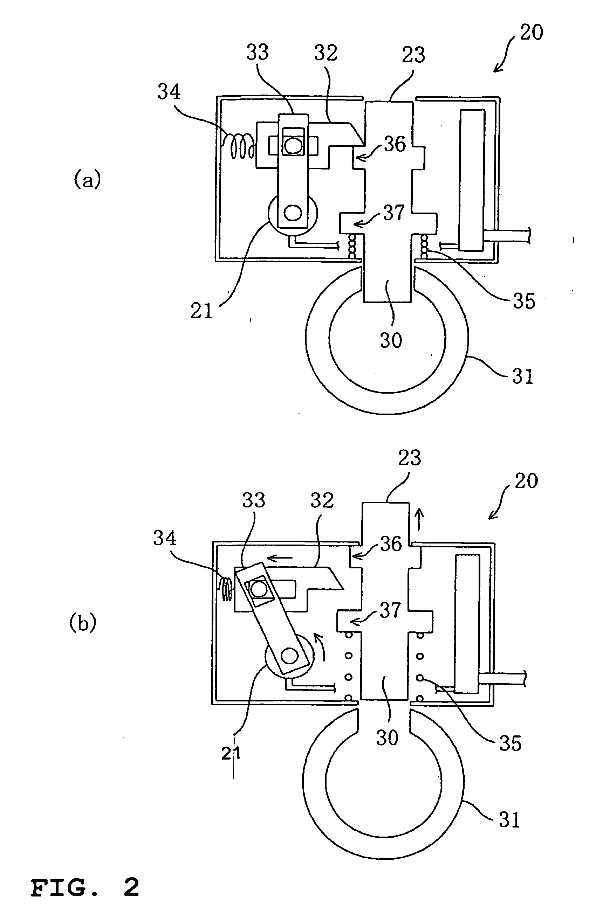

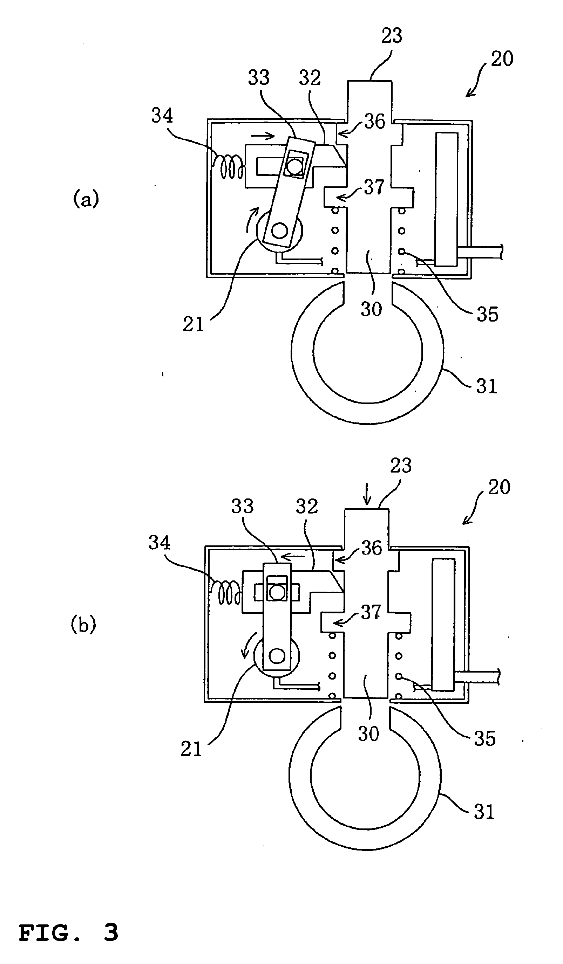

Description is hereinafter made specifically of a control method for automatic release and manual locking of the steering lock 20, with reference to FIGs. 2 and 3.

FIG. 2(a) is a sectional view illustrating the state where the steering lock 20 is locked. The locking switch 23 itself serves as a lock pin (manual lock means) 30. Handlebars 31 are locked with a distal end of the lock pin 30 engaged with a recess of the handlebars 31, and with a distal end of a slidable slider (retention member) 32 engaged with a projection 36 of the lock pin 30 by an urging force of a spring 34.

When the authentication means 13 determines authentication to be successful, a release control section 15 issues a steering lock release signal, activating the actuator 21 to pivot in the direction of the arrow as shown in FIG. 2(b). The actuator 21 is coupled to a link mechanism 33. As the actuator 21 pivots, the link mechanism 33 moves along a groove of the slider 32 in the direction opposite to the lock pin 30, bringing the slider 32 out of engagement with the projection of the lock pin 30. This brings the lock pin 30 out of engagement with the recess of the handlebars 31 due to an urging force of a spring 35, thereby automatically releasing the steering lock 20.

When automatic release of the steering lock 20 has been detected (for example, the position of the lock pin 30 has been detected), the actuator 21 pivots in the direction of the arrow as shown in FIG. 3(a), moving the link mechanism 33 in the direction of the lock pin 30, which brings the slider 32 into engagement with the projection 36 of the lock pin. The link mechanism 33 is in contact with an end of the groove of the slider 32 in this state, and therefore the slider 32 cannot move in the direction opposite to the lock pin 30. It is thus impossible to press the locking switch 23 into the recess of the handlebars 31. In other words, once the steering lock 20 is automatically released, the steering lock 20 is kept in the state where manual locking is not allowed. Any accidental operation of the locking switch during riding by the rider, therefore, does not result in locking of the steering lock 20.

When the power source 14 of the control unit 10 is turned off, the actuator 21 pivots in the direction of the arrow as shown in FIG. 3(b), moving the link mechanism 33 toward a center part of the groove of the slider 32. Pressing the locking switch 23 from this state causes the projection 36 of the lock pin 30 to retract the slider 32, for the distal end of the slider 32 is formed to be inclined. When the projection 36 of the lock pin 30 passes the position of the distal end of the slider 32, the slider 32 is pushed back in the direction of the lock pin by an urging force of the spring 34 to return to the locking state as shown in FIG. 2(a).

With the method described above, the steering lock 20 is automatically released when the power source 14 of the control unit 10 is turned on. Once the steering lock 20 is automatically released, the steering lock 20 is kept in the state where manual locking is not allowed. When the power source 14 of the control unit 10 is turned off, manual locking is allowed.

If authentication of a signal transmitted from the portable device 11 is successful, the power source 14 of the control unit 10 of the vehicle is turned on and the steering lock 20 is released. This allows the rider to move the vehicle without starting an engine, facilitating maintenance and other work. When the power source 14 of the control unit 10 of the vehicle is turned off, the steering lock 20 can be manually locked. This can minimize actuating means (actuator) for actuating the steering lock 20 to the size proper to release the steering lock 20.

Once the steering lock 20 is automatically released, the steering lock 20 is kept in the state where manual locking is not allowed. Any accidental operation of the locking switch during riding by the rider, therefore, does not result in locking of the steering lock 20.

Further, as shown in FIGs. 2 and 3, the integral constitution of the manual lock means (lock pin 30) for manually locking the steering lock 20 and the automatic release means (actuator 21) for automatically releasing the steering lock 20 can reduce the size of a release/lock device for the steering lock 20.

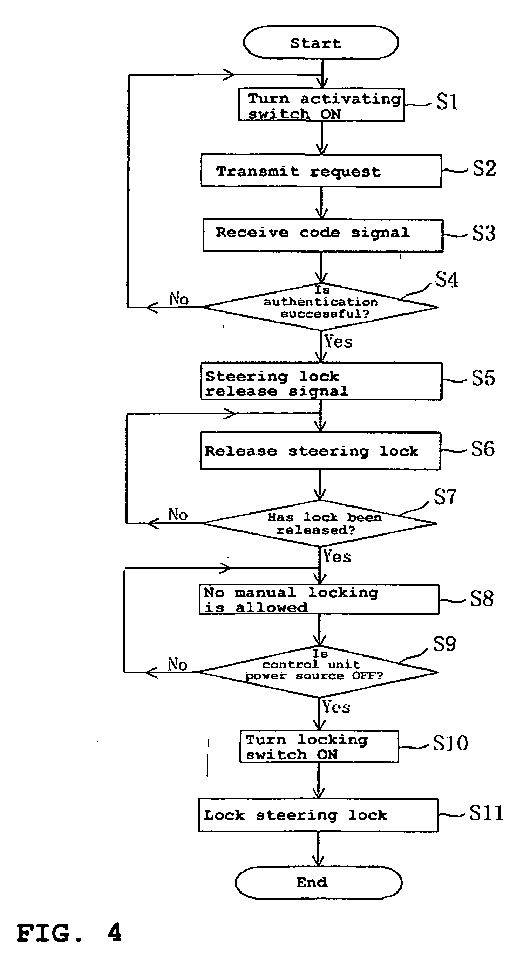

Now, a vehicle control method using the vehicle controller 100 of FIG. 1 will be described with reference to a flowchart shown in FIG. 4.

A rider operates the activating switch 16 provided on the vehicle (the step S1) to issue a request signal from the transmitter-receiver 12 provided on the vehicle (the step S2).

Upon reception of the request signal, the portable device 11, which the rider carries, sends a code signal back automatically. The transmitter-receiver 12 provided on the vehicle receives the code signal (step S3) and identifies the signal with a specific reference code preset by the authentication means 13 (step S4).

When the authentication succeeds, meaning the rider is authenticated as the owner of the vehicle, the unlock control section 24 of the control unit 10 issues a release signal (step S5) to automatically release the steering lock 20 (step S6). These conditions allow the rider to move the vehicle, so that the rider can start vehicle inspection, maintenance or other work immediately. It should be understood that if the authentication fails, the steering lock 20 remains locked, thus providing antitheft protection for the vehicle.

When the steering lock 20 has been released, the vehicle is ready to start the engine for run. If the steering lock 20 is determined to be released (step S7), the steering lock 20 is kept in the state where manual locking is not allowed (step S8). Manual locking of the steering lock 20 during riding is thereby disabled.

When the vehicle comes to a stop after running and the engine is stopped and an off state of the power source of the control unit 10 is determined (step S9), the steering lock 20 is released from the state where manual locking is not allowed during riding. When the rider operates the locking switch 23 (step S10), the steering lock 20 is manually locked.

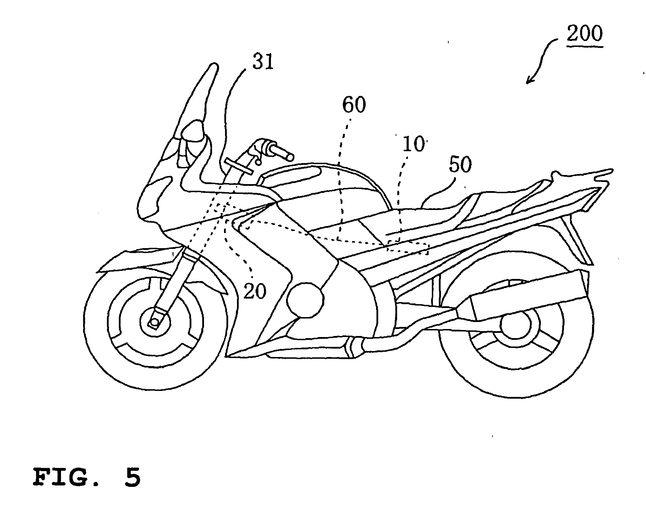

With reference to FIGs. 1 to 4, the description has been made above for the feature of the configuration of the vehicle controller 100 for a two-wheeled motor vehicle according to the embodiments. In turn, FIG. 5 illustrates an example in which the vehicle controller 100 is installed on a two-wheeled motor vehicle 200.

In the vehicle controller, the control unit 10 and the steering lock 20 may be handled as separate configurations, which can improve layout flexibility in the vehicle. In the example illustrated in FIG. 5, the control unit 10 is located below a seat 50 where extra space is relatively created, while the steering lock 20 is located adjacent to handlebars 31. The steering lock 20 is coupled to the control unit 10 via wiring 60, and in response to a release signal from the release control section 15 of the control unit 10, the steering lock 20 is automatically released. Rider's operation of the locking switch 23 disposed adjacent to or integral with the steering lock 20 actuates the manual lock means 22 of the steering lock 20, so that the steering lock 20 is manually locked.

For triggering of authentication through rider's operation of the activating switch 16, the activating switch 16 is preferably disposed in the place offering good operability to the rider (e.g. near a speed meter). In the case where the activating switch 16 is a push switch similar to the locking switch 23 of the steering lock 20, activation of the authentication system and manual locking of the steering lock 20 are achieved through common operation of "pressing," providing improved operability.

Further, in the case where the activating switch 16 has the constitution of a two-stage push switch, turning-off operation of the power source of the control unit 10, as well as triggering of authentication can be achieved with the same switch, providing further improved operability. In this case, the activating switch 16 should be set such that for short pressing (first pressing operation), triggering of authentication is activated and for long pressing (second pressing operation), the power source of the control unit 10 is turned off.

While the teaching of the invention is explained above by way of the preferable embodiment, such descriptions are not limiting items. Therefore, various modifications may be made.

The term "two-wheeled motor vehicle" used herein means a motorcycle, including every motorbike and motor scooter, and, more particularly, is a vehicle which can be turned by tilting the vehicle body. Thus, a vehicle equipped with two or more front wheels and/or two or more rear wheels, thus having three or four (or more) wheels in total is also included in the "autobicycle."

Without any limitation to motorcycles, the teaching of the present invention may also be applied to other vehicles, as long as a vehicle can take advantage of effects of the invention. This includes any straddle-type vehicles, such as four-wheeled buggies or all terrain vehicles (ATV) and snowmobiles.

The present embodiments can provide a vehicle controller for a straddle-type vehicle, which offers improved maintenance convenience and has an authentication function with excellent operability.

The description above discloses (amongst others) an embodiment of a vehicle controller for a straddle-type vehicle including: a portable device for transmitting a code signal; and authentication means for receiving and authenticating the code signal, in which if the authentication is determined to be successful, a release signal is issued from a control unit of the vehicle to actuate release means for a steering lock, and in which when power source of the control unit is turned off, lock means for the steering lock is actuated through user's operation of a push-type locking operation element to permit manual locking.

In a preferred embodiment, manual lock means for manually locking the steering lock is formed integrally with automatic release means for automatically releasing the steering lock.

In a preferred embodiment, once the steering lock is automatically released, the manual lock means is kept in the state where manual locking is not allowed until the power source of the control unit is turned off.

In a preferred embodiment, the code signal transmitted from the portable device is transmitted in response to a request signal transmitted in response to user's operation of an activating switch provided in the vehicle, and the activating switch is a push switch.

In a preferred embodiment, the activating switch has the constitution of a two-stage push switch so that the request signal is transmitted from the vehicle in response to user's first pressing operation and the power source of the control unit is turned off in response to user's second pressing operation.

The description further discloses an embodiment of a straddle-type vehicle incorporating the vehicle controller for a straddle-type vehicle.

The embodiments provide the vehicle controller for a straddle-type vehicle in which if authentication of a signal transmitted from the portable device is successful, the control unit of the vehicle issues a release signal to release the steering lock. This allows a driver to move the vehicle without starting-up the engine, thereby facilitating maintenance and other work. When the power source of the control unit of the vehicle is turned off, the steering lock can be manually locked. This can minimize actuating means (actuator) for actuating the steering lock to the size proper to release the steering lock.

The manual lock means for manually locking the steering lock is formed integrally with the automatic release means for automatically releasing the steering lock, thereby reducing the size of a release/unlock device for the steering lock.

The activating switch operated by the user to control transmission of the request signal for triggering of authentication is a push switch similar to the locking switch operated by the user for manual locking of the steering lock. Different types of operations, therefore, can be achieved through common operation of "pressing," providing improved operability.

The description above discloses as a particularly preferred embodiment, in order to provide a vehicle controller for a straddle-type vehicle, which offers improved maintenance convenience and has an authentication function with excellent operability, a vehicle controller for a straddle-type vehicle includes a portable device 11 for transmitting a code signal and authentication means 13 for receiving and authenticating the code signal. If the authentication is determined to be successful, a release signal is issued from a control unit 10 of the vehicle to actuate release means for a steering lock 20 to automatically release the steering lock 20. When a power source 14 of the control unit 10 is turned off, manual locking is allowed. Manual locking of the steering lock 20 is actuated through user's operation of a push-type locking switch 23. Manual lock means 22 for manually locking the steering lock 20 is formed integrally with automatic release means 21 for automatically releasing the steering lock 20.

The description further discloses, as a first aspect a vehicle controller for a straddle type vehicle comprising: a portable device for transmitting a code signal; and authentication means for receiving and authenticating the code signal, wherein if the authentication is determined to be successful, a release signal is issued from a control unit of the vehicle to actuate release means for a steering lock, and wherein when power source of the control unit is turned off, lock means for the steering lock is actuated through user's operation of a push-type locking operation element to permit manual locking.

As a second aspect, in the vehicle controller for a straddle type vehicle according to the first aspect, manual lock means for manually locking the steering lock may be formed integrally with automatic release means for automatically releasing the steering lock.

As a third aspect, in the vehicle controller for a straddle type vehicle according to the first aspect, once the steering lock is automatically released, the manual lock means may be kept in the state where manual locking is not allowed until the power source of the control unit is turned off.

As a fourth aspect, in the vehicle controller for a straddle type vehicle according to the first aspect, the code signal transmitted from the portable device may be transmitted in response to a request signal transmitted in response to user's operation of an activating switch provided in the vehicle, and wherein the activating switch may be a push switch.

The description further discloses a fifth aspect, in the vehicle controller for a straddle type vehicle according to a fourth aspect, wherein the activating switch may have the constitution of a two-stage push switch so that the request signal is transmitted from the vehicle in response to user's first pressing operation and the power source of the control unit is turned off in response to user's second pressing operation.

As a sixth aspect, there is further disclosed a straddle type vehicle incorporating the vehicle controller for a straddle type vehicle according to any one of the above first to fifth aspect.

## Claims

1. Vehicle controller for a straddle type vehicle comprising: a portable device (11) for transmitting a code signal, and an authentication means (13) for receiving and authenticating the code signal, wherein the controller is configured to issue a release signal to actuate an release means (21) for a steering lock (20) upon successful authentication, and wherein a manual locking by actuating a lock means (22) for the steering lock is permitted, when a power source of the controller is turned off, **characterised by** said manual lock means (22) for the steering lock being actuated by user's operation of a locking switch (23) from a released status to a locked status for manual locking.

2. Vehicle controller according to claim 1, further comprising a control unit (10), wherein if the authentication is determined to be successful, the release signal is issued from the control unit of the vehicle to actuate the automatic release means (21) for the steering lock.

3. Vehicle controller according to claim 2, wherein the locking switch (23) of the steering lock is a push-type locking operation element.

4. Vehicle controller according to one of the claims 1 to 3, wherein the manual lock means for manually locking the steering lock is formed integrally with the automatic release means for automatically releasing the steering lock.

5. Vehicle controller according to one of the claims 1 to 4, wherein once the steering lock is automatically released, the manual lock means is kept in the state where manual locking is not allowed until the power source of the control unit is turned off.

6. Vehicle controller according to one of the claims 1 to 5, wherein the code signal transmitted from the portable device is transmitted in response to a request signal transmitted in response to user's operation of an activating switch (16) provided in the vehicle, and wherein the activating switch is a push switch.

7. Vehicle controller according to claim 6, wherein the activating switch has the constitution of a two-stage push switch so that the request signal is transmitted from the vehicle in response to user's first pressing operation and the power source of the control unit is turned off in response to user's second pressing operation.

8. Straddle-type vehicle incorporating the vehicle controller for a straddle type vehicle according to one of claims 1 through 7.

## Patentansprüche

1. Fahrzeugsteuerung für ein Fahrzeug vom Grätschsitz- Typ, aufweisend: eine mobile Vorrichtung (11) zum Übertragen eines Code- Signales und eine Authentizitätseinrichtung (13) zum Aufnehmen und Authentisieren des Code- Signales, wobei die Steuerung konfiguriert ist, ein Freigabesignal auszugeben, um eine Freigabeeinrichtung (21) für eine Lenkschloß (20) bei erfolgreicher Authentisierung zu betätigen, und wobei eine manuelle Schloß durch Betätigen einer Betätigungseinrichtung (22) für das Lenkschloß gestattet wird, wenn eine Antriebsquelle der Steuerung ausgeschaltet ist, **gekennzeichnet dadurch, dass** zum manuellen Verriegeln durch den Benutzer die manuelle Verriegelungseinrichtung (22) für das Lenkschloß durch die Betätigung eines Verriegelungsschalters (23) aus dem freigegebenen Status in einen verriegelten Status betätigt wird.

2. Fahrzeugsteuerung nach Anspruch 1, außerdem aufweisend eine Steuereinheit (10), wobei dann, wenn festgestellt wird, dass die Authentisierung erfolgreich ist, das Freigabesignal von der Steuereinheit des Fahrzeuges ausgegeben wird, um die automatische Freigabeeinrichtung (21) für das Lenkschloß zu betätigen.

3. Fahrzeugsteuerung nach Anspruch 2, wobei der Schloss-Schalter (23) des Lenkschlosses ein Verriegelungs- Betätigungselement vom Drück- Typ ist.

4. Fahrzeugsteuerung nach einem der Ansprüche 1 bis 3, wobei die manuelle Schloßseinrichtung für das manuelle Verriegeln des Lenkschlosses einstückig mit der automatischen Freigabeeinrichtung zum automatischen Freigeben des Lenkschlosses ausgebildet ist.

5. Fahrzeugsteuerung nach einem der Ansprüche 1 bis 4, wobei, sobald das Lenkschloß automatisch freigeben ist, die manuelle Schloßeinrichtung in dem Zustand gehalten wird, wo das manuelle Verriegeln nicht gestattet ist, bis die Antriebsquelle der Steuereinheit ausgeschaltet ist.

6. Fahrzeugsteuerung nach einem der Ansprüche 1 bis 5, wobei das Code- Signal, übertragen von der mobilen Vorrichtung, übertragen wird in Abhängigkeit von einem Anforderungssignal, übertragen in Abhängigkeit von der Betätigung eines Aktivierungsschalters (16), vorgesehen in dem Fahrzeug durch den Benutzer, und wobei der Aktivierungsschalter ein Druckschalter ist.

7. Fahrzeugsteuerung nach Anspruch 6, wobei der Aktivierungsschalter die Ausbildung eines zweistufigen Druckschalters hat, so dass das Anforderungssignal von dem Fahrzeug in Abhängigkeit von der ersten Druckbetätigung durch den Benutzer übertragen wird und die Antriebsquelle der Steuereinheit in Abhängigkeit von der zweiten Druckbetätigung durch den Bebnutzer ausgeschaltet wird.

8. Fahrzeug vom Grätschsitz- Typ, enthaltend eine Fahrzeugsteuerung für ein Fahrzeug vom Grätschsitz- Typ nach einem der Ansprüche 1 bis 7.

## Revendications

1. Contrôleur de véhicule pour un véhicule du type monté à califourchon, comprenant : un dispositif portatif (11) pour émettre un signal de codage, et des moyens d'authentification (13) pour recevoir et authentifier le signal de codage, dans lequel le contrôleur est configuré pour délivrer un signal de libération afin d'actionner des moyens de libération (21) d'un verrou de direction (20) lors d'une authentification réussie, et dans lequel un verrouillage manuel en actionnant des moyens à verrou (22) du verrou de direction est autorisé, lorsqu'une source d'alimentation du contrôleur est désactivée, **caractérisé par** lesdits moyens à verrou manuel (22) du verrou de direction qui sont actionnés par la mise en oeuvre, par l'utilisateur, d'un commutateur de verrouillage (23), d'un état libéré à un état verrouillé du verrouillage manuel.

2. Contrôleur de véhicule selon la revendication 1, comprenant, en outre, une unité de commande (10), dans lequel, lorsque l'authentification est déterminée comme réussie, le signal de libération est délivré par l'unité de commande du véhicule pour actionner les moyens de libération automatique (21) du verrou de direction.

3. Contrôleur de véhicule selon la revendication 2, dans lequel le commutateur de verrouillage (23) du verrou de direction est un élément opératoire de verrouillage du type à poussée.

4. Contrôleur de véhicule selon l'une des revendications 1 à 3, dans lequel les moyens à verrou manuel pour verrouiller manuellement le verrou de direction sont formés d'un seul tenant avec les moyens de libération automatique pour libérer automatiquement le verrou de direction.

5. Contrôleur de véhicule selon l'une des revendications 1 à 4, dans lequel, une fois que le verrou de direction est automatiquement libéré, les moyens à verrou manuel sont maintenus dans l'état où le verrouillage manuel n'est pas autorisé tant que la source d'alimentation de l'unité de commande n'est pas désactivée.

6. Contrôleur de véhicule selon l'une des revendications 1 à 5, dans lequel le signal de codage émis par le dispositif portatif est émis en réponse à un signal de requête émis en réponse à une mise en oeuvre, par l'utilisateur, d'un commutateur d'activation (16) placé dans le véhicule, et dans lequel le commutateur d'activation est un commutateur à poussée.

7. Contrôleur de véhicule selon la revendication 6, dans lequel le commutateur d'activation a la structure d'un commutateur à poussée à deux étages, de telle sorte que le signal de requête est émis par le véhicule en réponse à une première action de pressage de l'utilisateur et la source d'alimentation de l'unité de commande est désactivée en réponse à une seconde action de pressage de l'utilisateur.

8. Véhicule du type monté à califourchon incorporant le contrôleur de véhicule pour un véhicule du type monté à califourchon selon l'une des revendications 1 à 7.
